Europäisches Patentamt

European Patent Office

Office européen des brevets

(11) Veröffentlichungsnummer: **0 492 292 A2**

## EUROPÄISCHE PATENTANMELDUNG

(21) Anmeldenummer: **91121285.0**

(22) Anmeldetag: **11.12.91**

(51) Int. Cl.⁵: **G02B 21/00**

(30) Priorität: **21.12.90 DE 4041435**

(43) Veröffentlichungstag der Anmeldung:
**01.07.92 Patentblatt 92/27**

(84) Benannte Vertragsstaaten:
**DE FR GB IT NL**

(71) Anmelder: **SIEMENS AKTIENGESELLSCHAFT**
**Wittelsbacherplatz 2**
**W-8000 München 2(DE)**

(72) Erfinder: **Sölkner, Gerald, Dr.**
**Naupliaallee 12**
**W-8012 Ottobrunn(DE)**

(54) **Abtastmikroskop.**

(57) Um die konfokale Abbildungstechnik in einem Raster-Lasermikroskop im Durchlichtbetrieb anwenden zu können, war man bisher gezwungen, die zu untersuchende Probe (IC) horizontal im Laserstrahl (LA) zu verschieben. Dieses Verfahren ist äußerst zeitaufwendig, insbesondere wenn die Messung die Abtastung einer Vielzahl von Probenpunkten erfordert. Das erfindungsgemäße Raster-Lasermikroskop verwendet eine Kollektorlinse (KL), um die auf der Probenunterseite divergent austretende Laserstrahlung zu bündeln und einem als Reflektor dienenden Tripelprisma (TP) zuzuleiten. Da das Tripelprisma (TP) das einfallende Strahlenbündel parallel zu sich selbst reflektiert und die Brennebenen (BE) der Kollektor- und der Objektivlinse (KL, OL) zusammenfallen, durchläuft die Laserstrahlung erneut den Meßstellenbereich (FO). Die auf der Probenoberseite austretende Laserstrahlung (LA') wird von der Objektivlinse (OL) erfaßt, in der Ablenkeinheit (S) umgelenkt und mit Hilfe eines Strahlteilers (HS) ausgekoppelt. Ein konfokaler Strahlengang gewährleistet eine hohe Tiefenauflösung, die etwa dem 0,7fachen der Wellenlänge der verwendeten Laserstrahlung (LA) entspricht.

FIG 2

EP 0 492 292 A2

In allen Bereichen der Entwicklung und Fertigung mikro- und optoelektronischer Bauelemente besteht ein steigender Bedarf an Raster-Lasermikroskopen, um Submikrometerstrukturen visuell beurteilen, Abweichungen von Sollmustern feststellen und topographische Parameter wie Höhen, Breiten oder Neigungswinkel erfassen und auswerten zu können (s. beispielsweise Scanning Vol. 7, 1985, S. 88 - 96, Vol. 9, 1987, S. 17 - 25 und Vol. 10, 1988, S. 157 - 162).

Die tiefendiskriminierenden Eigenschaften konventioneller Raster-Lasermikroskope können durch Anwendung des Verfahrens der konfokalen Abbildung deutlich verbessert werden (s. Scanning, Vol. 7, 1985, S. 79 - 87). Diese Abbildungstechnik gewährleistet, daß nur die aus dem Bereich des Laserfokus auf der Probe stammenden Signalkomponenten zum Meßsignal beitragen. Es lassen sich somit Tiefenschnitte einer Probe erstellen, wobei die Tiefenauflösung etwa dem 0,7-fachen der Wellenlänge der verwendeten Laserstrahlung entspricht.

Um die konfokale Abbildungstechnik im Durchlichtbetrieb anwenden zu können, war man bisher gezwungen, die zu untersuchende Probe im Laserstrahl horizontal zu verschieben. Dieses Verfahren ist äußerst zeitaufwendig, insbesondere wenn die Messung die Abtastung sehr vieler Probenpunkte erfordert und das zu erzeugende Probenbild sich aus beispielsweise 512 x 512 Pixeln aufbauen soll.

Der Erfindung liegt die Aufgabe zugrunde, ein Abtastmikroskop anzugeben, bei dem die Anwendung der konfokalen Abbildungstechnik im Durchlichtbetrieb keine Verschiebung der Probe erfordert. Diese Aufgabe wird erfindungsgemäß durch ein Abtastmikroskop mit den in Patentanspruch 1 angegebenen Merkmalen gelöst.

Der mit der Erfindung erzielbare Vorteil besteht insbesondere darin, daß sich die für die Erfassung der Meßwerte erforderliche Zeit erheblich verringert. Außerdem gewinnt man bei vielen Untersuchungen der Volumeneigenschaften einer Probe ein deutlich größeres Meßsignal, da die abtastende Strahlung die Probe zweimal durchläuft.

Die abhängigen Ansprüche betreffen vorteilhafte Weiterbildungen der im folgenden anhand der Zeichnung erläuterten Erfindung. Hierbei zeigt:

Fig. 1       ein konventionelles Raster-Lasermikroskop mit konfokalem Strahlengang (Auflichtbetrieb)

Fig. 2       ein erfindungsgemäßes Raster-Lasermikroskop mit konfokalem Strahlengang (Durchlichtbetrieb)

Fig. 3 und 4       Ausführungsbeispiele eines Reflektors

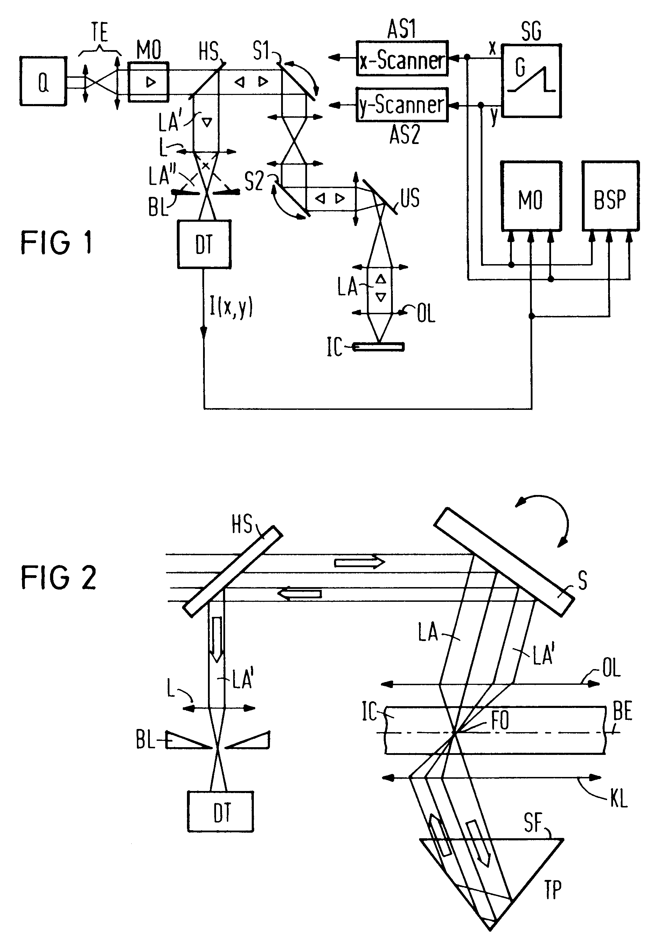

Das in Fig. 1 schematisch dargestellte Raster-Lasermikroskop besteht im wesentlichen aus einer Laserquelle Q, einem der Strahlaufweitung dienenden Teleskop TE, einem akustooptischem Modulator MO, einer zwei hochgenaue Galvanometerspiegel S1 und S2 aufweisenden Ablenkeinheit, einem Umlenkspiegel US und einer Objektivlinse OL, die den Laserstrahl LA auf die abzutastende Probe IC fokussiert. Das Raster-Lasermikroskop ist zusätzlich noch mit einer in Fig. 1 nicht näher bezeichneten telezentrischen Optik ausgestattet, um sicherzustellen, daß der Laserstrahl LA in der Objektivpupille örtlich ruht und lediglich eine Kippbewegung mit der Pupille als Drehpunkt ausführt. Des weiteren enthält das Mikroskop einen Detektor DT zum Nachweis der von der Probe IC reflektierten Strahlung LA'. Diese wird durch die Objektivlinse OL kollimiert und nach dem Durchlaufen der Ablenkeinheit S1, S2 mit Hilfe des Strahlteilers HS ausgekoppelt. Dem Detektor ist eine Linse L vorgeschaltet, die das ausgekoppelte Strahlenbündel LA' in die Ebene einer Lochblende BL fokussiert. Aufgrund des konfokalen Strahlengangs gelangt nur die im Bereich des Laserfokus auf der Probe IC reflektierte Strahlung zum Detektor DT (der Laserfokus auf der Probe IC und die Blendenöffnung bilden optisch konjungierte Punkte). Die von außerhalb der Brennebene stammende Strahlung LA'' liefert keinen Beitrag zum Meßsignal I (x, y), da diese die Fokussierungsbedingung verletzt und von der Blende BL abgefangen wird.

Das der Intensität der reflektierten Strahlung LA' proportionale Ausgangssignal I (x, y) des Detektors DT wird üblicherweise verstärkt und in Abhängigkeit vom Ort des Laserfokus auf der Probe IC in einen Bildspeicher BSP eingelesen bzw. zur Modulation der Helligkeit eines Bildpunktes auf einem Sichtgerät MO herangezogen. Die Ortsinformation liefert hierbei der die Ablenksignale erzeugende Rastergenerator SG, der ausgangsseitig sowohl mit den den Galvanometerspiegeln S1 und S2 zugeordneten Ansteuereinheiten AS1 bzw. AS2 als auch mit den entsprechenden Eingängen des Sichtgerätes MO und der Speichereinheit BSP verbunden ist.

Aufgrund der schnellen Ablenkung des Laserstrahls LA, kann man die optischen Eigenschaften (Reflektivität) der Probenoberfläche innerhalb kürzester Zeit abtasten. Für die Untersuchung der optischen Eigenschaften des Volumens der Probe IC ist das beschriebene Raster-Lasermikroskop allerdings weniger geeignet, da sich Polarisationseffekte und Einflüsse des Brechungsindex oder der Doppelbrechung usw. durch Analyse der an der Oberfläche reflektierten Strahlung (Auflichtbetrieb des Mikroskops) nicht oder nur sehr schwach nachweisen lassen.

Das in Fig. 2 schematisch dargestellte Raster-Lasermikroskop ermöglicht die Anwendung der konfokalen Abbildungstechnik im Durchlichtbetrieb, so daß auch die optischen Eigenschaften des Volumens mit hoher Tiefenauflösung gemessen werden können. Da man ein schnelles Ablenksystem S zur Positionierung der Lasersonde LA verwendet, ist keine horizontale Verschiebung der Probe IC im Strahl LA erforderlich. Die Fig. 2 zeigt nur die für die Erläuterung der Erfindung wesentlichen Komponenten, wobei für die schon anhand der Fig. 1 beschriebenen Elemente dieselben Bezugszeichen verwendet werden. Zur besseren Verdeutlichung des Strahlengangs wurde insbesondere auf die Darstellung des für die flächenhafte Abtastung erforderlichen zweiten Ablenkspiegels verzichtet.

Zur Erstellung eines Tiefenprofils wird die Laserstrahlung LA mit Hilfe der Objektivlinse OL auf eine parallel zur Oberfläche der Probe IC orientierte Ebene BE fokussiert, wobei die Stellung des Ablenkspiegels S den Ort des Laserfokus FO (Meßstelle) in dieser Ebene BE definiert. Die unterhalb der Probe IC angeordnete Kollektorlinse KL hat die Aufgabe, die auf der Probenunterseite divergent austretende Laserstrahlung zu bündeln und einem als Reflektor dienenden Tripelprisma TP (Katzenauge) oder Tripelspiegel zuzuleiten. Da diese Elemente ein in die Stirnfläche FS eintretendes paralleles Strahlenbündel in sich selbst reflektieren und die Brennebenen BE der Kollektor- und der Objektivlinse KL bzw. OL zusammenfallen, durchläuft die Laserstrahlung LA erneut den Meßstellenbereich FO und tritt an der Probenoberfläche divergent aus. Hier wird sie von der Objektivlinse OL erfaßt in der Ablenkeinheit S umgelenkt und mit Hilfe des Strahlteilers HS ausgekoppelt. Dem Detektor DT ist wieder eine Linse L und eine Lochblende BL vorgelagert, um einen konfokalen Strahlengang zu verwirklichen.

Zur besseren Verdeutlichung des Strahlengangs im Mikroskop wurden die hin- und rücklaufenden Strahlen LA, LA' räumlich separiert dargestellt. In der Praxis beobachtet man allerdings eine sehr viel stärkere Überlappung beider Strahlen, so daß diese auch annähernd dieselbe Fläche auf dem Ablenkspiegel S ausleuchten und dadurch keine Verschiebung des Fokus der Linse L in der Ebene der Lochblende BL stattfindet.

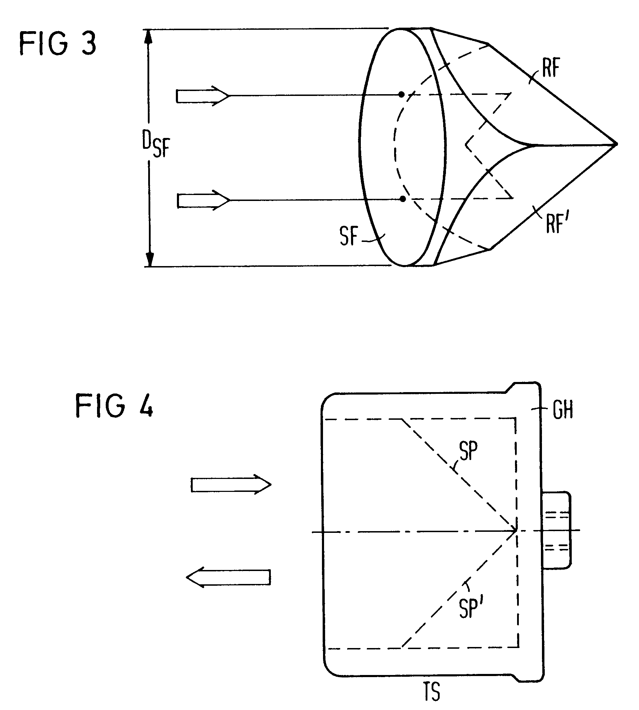

Die Fig. 3 zeigt ein als Reflektor TP dienendes Tripelprisma (Katzenauge bzw. corner-cube-reflector) mit drei unter einem Winkel von 90° zueinander orientierten totalreflektierenden Flächen RF und RF'. Es hat die Form einer Würfelecke, bei der die Stirnfläche SF senkrecht auf der Würfeldiagonalen steht. Das aus Quarzglas oder BK7 gefertigte und gegebenenfalls mit $MgF_2$ beschichtete Tripelprisma hat die Eigenschaft, ein Strahlenbündel, unabhängig vom Einfallswinkel, parallel zu sich selbst zu reflektieren. Die Verwendung dieses Prismentyps erfordert daher keine exakte Ausrichtung im Strahlengang des Raster-Lasermikroskops. Man muß lediglich sicherstellen, daß der Durchmesser $D_{SF}$ der Stirnfläche SF größer ist als die Breite des einfallenden Strahlenbündels.

Der in Fig. 4 dargestellte Tripelspiegel (Retroreflektor) besteht aus drei unter einem Winkel von 90° zueinander stehenden Einzelspiegeln SP, SP', die mit hoher Planität gefertigt und zueinander justiert in eine stabile Fassung GH eingebaut sind. Die Spiegel SP, SP' selbst bestehen aus optischem Glas, Hartglas oder Quarzglas, wobei als Verspiegelung beispielsweise ein mit $SiO_2$ überzogene Aluminium- oder Goldschicht in Frage kommt. Tripelspiegel haben insbesondere den Vorteil, daß sie Strahlung aus einem großen Spektralbereich reflektieren, keine polarisierenden Effekte zeigen, eine hohe Zerstörungsschwelle gegenüber Laserstrahlung aufweisen und ein sehr geringes Gewicht besitzen.

Die Erfindung ist selbstverständlich nicht auf die beschriebenen Ausführungsbeispiele beschränkt. So ist es ohne weiteres möglich, anstelle des Lasers Q und der Modulatoreinheit MO auch eine gepulste Laserquelle, insbesondere einen Pikosekundenlaser, zu verwenden.

Als Ablenkeinheiten kommen auch akustooptische Reflektoren und sogenannte Polygon-Reflektoren in Betracht.

Zur Untersuchung der optischen Eigenschaften des Probenvolumens kann es notwendig sein, polarisiertes Licht zu verwenden. Das Raster-Lasermikroskop enthält dann zusätzlich noch Polarisatoren und Analysatoren im Strahlengang.

Um verschiedene Tiefenschnitte zu erstellen, ist es von Vorteil, die Probe IC auf einem höhenverstellbaren Tisch anzuordnen. Ein für das erfindungsgemäße Raster-Lasermikroskop geeigneter Probentisch ist beispielsweise aus Scanning, Vol. 7, 1985, S. 67 bekannt.

Die Objektivlinse OL und die Kollektorlinse KL müssen nicht notwendigerweise dieselbe Brennweite besitzen. Wesentlich ist nur, daß deren Brennebenen zusammenfallen.

Ein konfokaler Strahlengang läßt sich auf verschiedene Art und Weise verwirklichen. Es wird auf die eingangs genannten Veröffentlichungen und insbesondere auf das aus Scanning, Vol. 9, 1987, S. 18 bekannte Raster-Lasermikroskop verwiesen.

**Patentansprüche**

1. Abtastmikroskop,
   **gekennzeichnet durch**
   - eine Strahlungsquelle (Q),
   - eine konfokale Eigenschaften aufweisende erste optische Einheit (OL, L, BL), die die Quellenstrahlung (LA) in eine Brennebene (BE) fokussiert und die auf einer Probe (IC) austretende Strahlung (LA') erfaßt und einer Detektoreinheit (DT) zuführt,

- eine Ablenkeinheit (S) zur Verschiebung des Fokus (FO) der Quellenstrahlung (LA) in der Brennebene (BE),
- eine zweite optische Einheit (KL), die bezüglich der der Fokussierung der Quellenstrahlung (LA) dienenden Komponente (OL) der ersten optischen Einheit derart angeordnet ist, daß deren Brennebenen (BE) zusammenfallen
- und einen in Quellenstrahlrichtung hinter der zweiten optischen Einheit (KL) angeordneten Reflektor (TP), der das von der zweiten optischen Einheit (KL) erzeugte Strahlenbündel parallel zu sich selbst reflektiert.

2. Abtastmikroskop nach Anspruch 1,
   **dadurch gekennzeichnet,**
   daß der Reflektor (TP) drei Prismenflächen (RF, RF') aufweist, die unter einem Winkel von 90° zueinander orientiert sind.

3. Abtastmikroskop nach Anspruch 1 oder 2,
   **gekennzeichnet durch**
   ein Prisma als Reflektor (TP), wobei das Prisma die Form einer Würfelecke aufweist und die Stirnfläche SF senkrecht zur Würfeldiagonalen orientiert ist.

4. Abtastmikroskop nach Anspruch 1,
   **dadurch gekennzeichnet,**
   daß der Reflektor (TP) drei Spiegelflächen (SP, SP') aufweist, die unter einem Winkel von 90° zueinander orientiert sind.

5. Abtastmikroskop nach einem der Ansprüche 1 bis 4,
   **gekennzeichnet durch**
   eine impulsförmig emittierende Strahlungsquelle (Q, MO).

6. Abtastmikroskop nach einem der Ansprüche 1 bis 5,
   **gekennzeichnet durch**
   einen Laser als Strahlungsquelle (Q).

FIG 1

FIG 2

FIG 3

FIG 4